# FASCICULE DE BREVET EUROPEEN

(11) **EP 0 837 912 B1**
(45) Date de publication et mention de la délivrance du brevet: **13.03.2002**
(21) Numéro de dépôt: 96924039.9
(22) Date de dépôt: 28.06.1996
(51) Int. Cl.: C09D 9/02, B08B 3/10

(54) **PROCEDE DE TRAITEMENT D'UN SUBSTRAT**
VERFAHREN ZUR BEHANDLUNG EINES SUBSTRATS
METHOD FOR PROCESSING A SUBSTRATE

(30) Priorité: 30.06.1995 FR 9508151
(43) Date de publication de la demande: 29.04.1998
(73) Titulaire: C 2 P, 69657 Villefranche Cédex (FR)
(72) Inventeur: SEINERA, Henri, F-69600 Oullins (FR); DE FERAUDY, Hugues, F-69220 Charentay (FR); TOULOUSE, Jacky, F-01480 Chaleins (FR)
(74) Mandataire: Gaucherand, Michel
(86) Numéro de dépôt international: FR9601012
(87) Numéro de publication internationale: WO9702327

(56) Documents cités:
- WO-A-94/24216
- DE-A- 4 324 830
- DE-C- 4 337 206
- GB-A- 493 765
- US-A- 3 944 499
- US-A- 4 208 015
- US-A- 5 174 316
- US-A- 5 423 919

## Description

L'invention concerne un procédé de traitement d'un substrat en vue, notamment, de son recyclage.

L'industrie du recyclage s'intéresse à la récupération de matériaux polymères. Le traitement des substrats polymères usagés constitue une phase importante. Par exemple les matériaux polymères constituant les pare-chocs de véhicule sont altérés en surface par les rayons ultraviolets, recouverts de peinture. Le traitement permet d'aboutir à l'obtention de matériaux ayant des propriétés physico-chimiques quasi identiques à celles des matériaux polymères vierges.

### Etat de la technique

On connaît d'après le WO 94/16 834 un procédé qui consiste à projeter, sur une surface solide, un milieu abrasif, au moyen d'un courant de fluide sous pression, afin d'arracher les revêtements ou les autres contaminants de ladite surface. Le milieu abrasif comprend des particules abrasives en suspension dans de l'eau et un additif de rinçage pour réduire la quantité de résidus de milieu abrasif restant sur la surface solide.

Le US-A-5 423 919 présente un procédé quasi similaire, mais adapté au nettoyage de tubes. Un flux nettoyant abrasif circule à l'intérieur des tubes fixes. Le procédé, équivalent au ponçage à l'aide d'un objet abrasif, consiste à nettoyer une seule surface lisse, bien déterminée, et ne présentant aucune discontinuité.

On connait d'après le DE-A-43 37 206 un procédé et un dispositif pour enlever des autocollants ou du papier présent sur des pièces en matériaux synthétiques. Le dispositif comprend deux cuves d'agitation et de circulation, remplies d'eau, pour traiter les matériaux. L'eau agit en dissolvant la colle du papier, et agit en tant que vecteur porteur des pièces. Le simple décollage du papier est obtenu par friction mécanique mutuelle des pièces les unes contre les autres. Les conditions sont peu drastiques et il n'y a pas de particules abrasives.

Le US-A-4 208 015 décrit un procédé pour traiter des matériaux polymères déchiquetés. De l'eau, des particules abrasives, et le substrat sont placés dans une cuve d'agitation. Cependant, les particules abrasives ont une taille particulièrement importante de 2 à 7 mm.

Tous ces procédés manquent d'efficacité, soit parce qu'ils ne sont pas adaptés aux substrats de forme quelconque, soit parce qu'il n'y a pas d'agent d'abrasion. Dans le US-A-4 208 015, la taille des particules d'abrasion est également trop importante, ce qui oblige à accroître la quantité de ces particules d'abrasion pour garder la même efficacité de traitement, réduisant en conséquence la quantité de substrat à traiter.

### Exposé de l'invention

Le problème posé est de réaliser un procédé qui permette d'accroître considérablement le rendement de production du traitement. Le but de l'invention est de pallier le manque d'efficacité des techniques existantes, en utilisant au moins un liquide et des particules abrasives de petite taille.

Suivant l'invention, un procédé de traitement d'un substrat, se présentant sous la forme de morceaux composés d'au moins un matériau polymère, dans lequel on soumet le substrat à une agitation dans un milieu d'abrasion comprenant au moins un liquide et au moins un agent d'abrasion sous forme de particules est caractérisé en ce que la dureté des particules d'agents d'abrasion est inférieure à 7 et en ce que les particules correspondent à une courbe granulométrique ayant une coupe maximum à 1 mm et un diamètre médian entre 0,05 et 1 mm.

Ainsi dans le milieu d'agitation, la petite taille des particules d'abrasion permet une multiplicité des contacts entre les grains de particules et la surface à nettoyer. Les particules d'abrasion sont véritablement piégées entre deux substrats. L'augmentation du nombre de contacts est telle que l'action de frottement des particules est beaucoup plus efficace. Pour un volume de milieu d'agitation donné, on pourra de ce fait diminuer la quantité d'agent d'abrasion et en conséquence augmenter proportionnellement la quantité de substrat à traiter. Le procédé est économiquement beaucoup plus rentable.

### Description détaillée

D'autres avantages du procédé et du dispositif selon l'invention ressortiront à la lecture de l'exemple de réalisation détaillé de l'invention, en se référant au dessin donné à titre d'illustration, dans lequel :

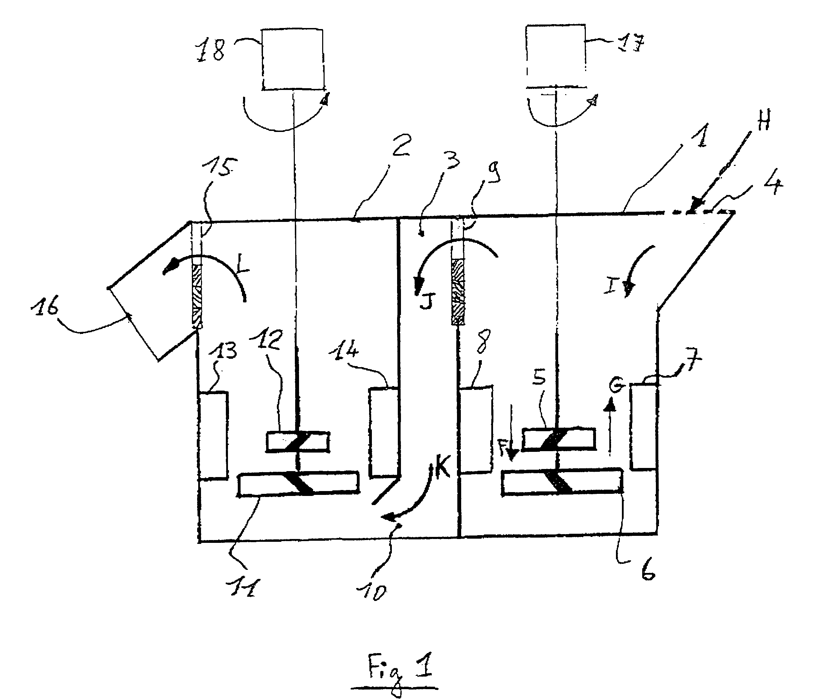

- la figure 1 représente schématiquement un dispositif dans lequel le procédé selon l'invention peut être mis en oeuvre.

Le milieu d'abrasion intervenant dans le procédé selon l'invention comprend au moins un liquide et au moins un agent d'abrasion sous la forme de particules.

Une des fonctions du liquide est de ramollir les couches superficielles du substrat et/ou, le cas échéant, de son revêtement. En raison de l'agitation, l'agent d'abrasion exerce un frottement et un raclement de la surface du substrat et/ou, le cas échéant, de son revêtement.

Un milieu liquide contenant uniquement de l'eau permet déjà un traitement efficace.

Le liquide peut contenir au moins un alcool. Les alcools primaires, secondaires, tertiaires, ainsi que les polyalcools peuvent être utilisés. On utilise de préférence un alcool dont la structure chimique comprend au moins un noyau aromatique. Comme exemple d'un tel alcool, on peut citer l'alcool benzylique, méthylbenzylique, diméthyl-benzylique, méthoxy-benzylique, triméthoxy-benzylique et benzyl-isopropylique. On peut utiliser un mélange d'alcools. Il semblerait que les alcools donnant facilement des alcoolates en présence d'une base conduisent à de meilleurs résultats.

De très bons résultats sont en général obtenus lorsque le liquide contient au moins une base selon Brönsted, préférentiellement une base forte. On peut choisir, en particulier, une base hydroxylée comme l'hydroxyde de sodium ou de potassium ou une base azotée comme l'ammoniac ou une amine. Le milieu alcalin permet aussi l'élimination par hydrolyse des huiles et des graisses qui souillent le substrat

Il peut être envisagé dans certains cas, notamment lorsque le liquide comporte deux phases liquides non miscibles, d'ajouter au moins un agent qui rend compatible et/ou au moins un agent mouillant et/ou au moins un agent dispersant.

L'agent qui rend compatible a pour fonction de permettre l'obtention d'une seule phase liquide lorsque la base est insoluble ou trop peu soluble dans l'alcool ou dans le mélange alcool-eau. On réalise alors une émulsion. Cet agent qui rend compatible peut être un alcool gras linéaire ou ramifié ayant de 4 à 15 atomes de carbone. Il peut être un produit organique, tel que par exemple un alcool gras linéaire, phosphaté, phosphoné, sulfaté ou sulfoné. Il peut être un composé oxy-éthylé, tel que par exemple à base d'alcool gras modifié par oxyde d'éthylène ou oxyde de propylène. Il peut être un tensioactif (par exemple un savon biodégradable), et de préférence non moussant, tel qu'un tensioactif à base acrylique.

L'agent mouillant est en général un tensioactif. Il a pour fonction d'améliorer le mouillage de la surface du substrat, c'est-à-dire de modifier sa tension superficielle pour accroître l'efficacité de ramollissement du liquide et l'efficacité de friction de l'agent d'abrasion. Certains agents qui rendent compatibles peuvent jouer en plus de cette première fonction, le rôle d'agent mouillant. On utilise par exemple des savons avec une quantité inférieure à 1 %. En plus de leur fonction d'agent mouillant, ces savons ont une fonction de nettoyage en dissolvant les huiles et les graisses.

L'agent dispersant peut être ajouté pour améliorer la tenue en suspension dans le liquide des particules d'agent d'abrasion.

Le liquide peut aussi comprendre un solvant ou un mélange de solvants tels que le diméthylformamide (DMF), les solvants fluorés, les solvants chlorés comme le perchloréthylène, le dichlorométhane, le trichloréthylène et le chlorobenzène.

La composition générale du liquide en pourcentages pondéraux est de préférence la suivante :
- 0 à 100 % d'eau,
- 0 à 100 % d'alcool,
- 0 à 50 % de base,
- 0 à 5 % d'agent qui rend compatible et/ou d'agent mouillant et/ou d'agent dispersant,
- 0 à 50 % de solvant,
la somme des pourcentages choisis pour tous ces composants étant égale à 100 %.

Les particules d'agent d'abrasion doivent être insolubles ou quasiment insolubles dans ledit liquide. Elles doivent présenter une résistance importante à l'éclatement. Elles peuvent par exemple être constituées d'au moins un matériau choisi parmi les charges minérales dont la dureté est inférieure à 7 telles que le carbonate de calcium (dureté sur l'échelle de Mohs 3), le kaolin (dureté 2.0-2.5) et le talc (dureté 1). Avec certains matériaux trop abrasifs, on risque de rayer en profondeur et de creuser le substrat à traiter. Ils pourraient être également trop agressifs pour le matériel intervenant dans de la mise en oeuvre du procédé ou être gênants pour les éventuelles transformations ultérieures du produit traité selon l'invention.

Les particules d'agent d'abrasion ont une taille au plus égale à 1 mm et correspondent généralement à une courbe granulométrique ayant une coupe à 1 mm maximum et un diamètre médian entre 0,05 et 1 mm. De préférence, elles correspondent à la coupe 300 - 500 µm et ont un diamètre médian de 50 à 200 µm déterminé à l'aide d'un appareil connu sous l'appellation CILAS 850 et commercialisé par la société ALCATEL.

Le procédé peut être précédé d'une étape de broyage du substrat afin que celui-ci se présente sous la forme de morceaux ou de plaquettes ayant les dimensions nécessaires à une mise en oeuvre du procédé dans les conditions les plus favorables. Les dimensions de ces derniers sont généralement inférieures à 10 cm et de préférence comprises entre 0,5 et 3 cm.

Le substrat peut être composé de matériaux divers. Il est généralement constitué de morceaux rigides provenant par exemple de pièces injectées, extrudées ou soufflées. Le procédé selon l'invention convient particulièrement au traitement de substrats composés d'au moins un matériau polymère. Ce dernier est préférentiellement un thermoplastique qui peut être choisi par exemple parmi les polyoléfines, les polyamides, les polyéthers blocs amides (PEBA), le polystyrène et ses copolymères, les polymères acryliques, les polyvinyliques, le chlorure de polyvinyle (PVC), et les polymères spéciaux.

Le polymère thermoplastique peut également être un mélange ou un alliage de polymères compatibles ou incompatibles comprenant ou non un tiers corps qui rend compatible. Ce peut être aussi un polymère à base de réseaux interpénétrés, c'est-à-dire résultant de la polymérisation et/ou polycondensation et/ou polyaddition tridimensionnelle combinée de plusieurs monomères, ou un polymère à base de réseaux semi-interpénétrés, c'est-à-dire résultant de la combinaison d'un réseau interpénétré tel que défini ci-dessus, avec un polymère linéaire, greffé ou non.

Les polyoléfines peuvent être des polyéthylènes, des polypropylènes, des polybutènes, des polyméthylpentènes, des copolymères éthylène-acétate de vinyle (EVA), des copolymères propylène-éthylène ou des ter-polymères éthylène-propylène-butylène.

Les polyamides peuvent être le polyamide 6, le polyamide 6-6, le polyamide 6-10, le polyamide 11, le polyamide 12 ou des polyamides semi-aromatiques.

Les polymères spéciaux peuvent être des polymères fluorés, des caoutchoucs thermoplastiques, des polyesters saturés, des polyuréthannes, des polycarbonates, des polyacétals, des polyoxydes de phénylène, des polysulfures de phénylène, des polysulfones, des polyimides et assimilés ou des polymères ayant subi une irradiation.

Les polyesters saturés peuvent être, par exemple, du polytéréphtalate d'éthylène ou du polytéréphtalate de butylène. De préférence le procédé selon l'invention est utilisé pour traiter du polypropylène, du polyéthylène ou du polystyrène.

Le procédé selon l'invention peut être employé pour ôter tout revêtement pouvant être éliminé par une opération d'abrasion. Il peut avantageusement être mis à profit pour traiter des substrats oxydés superficiellement tels que les pare-chocs de véhicule non peints, en vue d'ôter les couches en matériau polymère oxydées ou les couches altérées par les rayons ultraviolets. Les chaînes de polymères rompues sont éliminées. Ceci permet d'obtenir pour le matériau polymère traité des propriétés mécaniques équivalentes à celles de la matière vierge.

Il peut également servir à éliminer la peinture et les apprêts recouvrant certains substrats tels que les pare-chocs peints de véhicule. Dans ce cas, le milieu liquide sera de l'eau.

Toutefois, si le substrat présente des parties non recouvertes et des parties recouvertes, le traitement est utilisé de préférence pour enlever, sur les parties non recouvertes, les couches superficielles du substrat et, sur les parties recouvertes, à la fois le revêtement et les couches superficielles du substrat qui se trouvaient sous ce revêtement.

Pour l'obtention de résultats satisfaisants lors de la mise en oeuvre du procédé selon l'invention, les proportions pondérales sont :
- 40 à 70 % de substrat,
- 10 à 30 % d'agent d'abrasion et
- 20 à 50 % de liquide.
la somme de tous les pourcentages choisis étant égale à 100 %.

Les particules d'agent d'abrasion peuvent être en suspension dans le milieu d'abrasion lorsque celui-ci est au repos ou bien elles peuvent être mises en suspension uniquement par l'effet de l'agitation. Cette dernière doit être énergique. C'est pourquoi elle est de préférence réalisée dans une chambre de broyage ou dans un mélangeur. Elle peut parfois s'apparenter à un malaxage.

L'agitation, lors du traitement du substrat a normalement pour conséquence une augmentation de la température qui est avantageuse car elle facilite le traitement. Il n'est donc généralement pas nécessaire de chauffer le milieu d'abrasion. La température d'équilibre dépend de nombreux facteurs tels que la viscosité du milieu d'abrasion, sa composition et la taille des particules.

Dans certains cas, il peut être nécessaire de refroidir le milieu d'abrasion pour éviter que sa température n'atteigne des valeurs trop élevées. On maîtrise la température. La valeur idéale semble être de 70 - 100°C lorsque le substrat est essentiellement composé de polypropylène. En règle générale, le procédé selon l'invention est mis en oeuvre à une température inférieure à 150°C, et de préférence comprise entre 70 et 100°C.

La durée du traitement est fonction de la nature du milieu d'abrasion, de la température, de l'intensité de l'agitation, de la nature du substrat et bien sûr, du but visé. A cet égard, le traitement du substrat n'a pour objectif en général, que d'éliminer ses couches superficielles. Lorsque la température d'équilibre thermique est atteinte, une durée de traitement comprise entre 15 et 45 min. et en particulier entre 20 et 30 min., est généralement suffisante.

Le procédé selon l'invention peut être mis en oeuvre en continu ou en discontinu (batch). Le traitement du substrat en continu peut être réalisé dans un dispositif réacteur tel que celui représenté schématiquement dans la figure annexée.

Ce réacteur comprend en général au moins une cuve. De préférence on en utilise deux, de façon à faire diminuer le temps de séjour du substrat dans le réacteur. Elles ont une forme généralement sensiblement cylindrique 1, 2 ouvertes à leur sommet et communiquant entre elles par l'intermédiaire d'un couloir de circulation 3.

La cuve 1 est en général alimentée, au niveau du bec d'alimentation 4, par les trois constituants :
- liquide,
- particules d'agent d'abrasion destinées à former avec le liquide, ledit milieu d'abrasion, et
- solide constituée par les morceaux de substrat à traiter.

L'agitation au sein de la cuve 1 provoque le mélange desdits trois constituants. Elle est produite par la rotation d'au moins deux pales 5 et 6, mises en rotation par un moteur 17. La pale 5 a pour fonction d'entraîner le milieu d'abrasion et les morceaux de substrat vers le fond de la cuve 1, suivant la flèche F, et la pale 6, de diamètre supérieur à la pale 5, est orientée de façon à créer un courant se dirigeant vers le haut de la cuve 1, suivant la flèche G. Le brassage exercé par les pales 5 et 6 est rendu plus efficace par la présence de contre-pales 7 et 8 contre lesquelles se heurtent le milieu d'abrasion et le substrat.

Au sommet et sur un côté de la cuve 1 se trouve une ouverture 9 donnant sur le sommet du couloir 3. Le bas du couloir 3 débouche au fond de la cuve 2 par une ouverture 10. L'alimentation continue de la cuve 1 permet le débordement de son contenu dans le couloir 3 et par conséquent l'alimentation de la cuve 2.

L'agitation dans la cuve 2 est obtenue par la rotation d'au moins deux pales 11 et 12 mises en rotation par un moteur 18, pales dont l'orientation permet globalement la création d'un courant dirigé vers le haut de la cuve 2. Des contre-pales 13 et 14 améliorent le brassage dans la cuve 2. Un orifice déversoir de sortie 15 situé au sommet et sur un côté de la cuve 2 et auquel est rattaché un conduit 16 permet l'évacuation du substrat traité. Le mouvement global du substrat tout au long de son traitement est illustré par les flèches H, I, J, K, L.

Le conduit 16 amène généralement le substrat sur une grille (non représentée) où il subit un rinçage très poussé. La solution de rinçage retourne ensuite à l'entrée de la cuve. Un des avantages du procédé selon l'invention est que le substrat traité peut être facilement débarrassé des restes de milieu d'abrasion.

Le substrat traité, lavé, peut ensuite être centrifugé et séché. Il peut alors être réutilisé directement. Il peut aussi subir une étape d'extrusion pour améliorer encore ses propriétés mécaniques ; on pourra ainsi le reformuler, le recolorer.

Lorsque le substrat est recouvert avant le traitement, par exemple d'une peinture, l'efficacité du traitement peut être évaluée visuellement, soit par la constatation de l'absence de taches de revêtement sur le substrat traité soit, s'il reste des taches, par la mesure de la surface des taches.

L'efficacité du traitement peut aussi être déterminée par les propriétés mécaniques que possède le produit après le traitement selon l'invention. Pour ce faire, on le met par injection, sous forme d'éprouvettes ayant les dimensions requises par les normes d'essai.

De nombreux paramètres peuvent être modifiés pour obtenir la meilleure qualité de traitement souhaitée. L'efficacité dépend du nombre de pales et de contre-pales, de leur forme, ainsi qu'aux formes des cuves, de la température, de la composition du milieu d'abrasion et des dimensions des particules d'agent d'abrasion.

Par exemple, le milieu d'abrasion ne doit pas être trop fluide sinon l'efficacité de l'agitation est faible et le substrat doit séjourner longtemps dans les cuves pour atteindre un niveau de qualité acceptable. Le milieu d'abrasion ne doit pas non plus être trop visqueux sinon l'agitation est difficile à réaliser et la circulation du substrat est lente.

Le procédé selon l'invention peut être mis en oeuvre dans des cuves fermées, notamment si l'on souhaite travailler sous pression, ou avec des produits très volatils ou dangereux.

Les produits obtenus par le procédé selon l'invention peuvent ensuite être de nouveaux utilisés soit seuls, soit en mélange avec des substrats vierges. On peut donc réaliser, grâce au procédé selon l'invention, des produits tels que des pare-chocs, des bacs de batterie, d'autres pièces automobiles, des conteneurs horticoles ou toute pièce transformée par injection, extrusion ou soufflage, qui sont au moins en partie préparés à partir d'un matériau polymère traité selon l'invention.

Ainsi, le procédé selon l'invention permet un recyclage peu coûteux des pare-chocs de véhicule qui ne seront donc ni incinérés, ni mis en décharge.

### Exemples de réalisation

Le débit de circulation du substrat en continu peut être fixé, par exemple, à 2 t/h pour un substrat sans peinture, ou à 1 t/h pour un substrat avec peinture. L'efficacité de l'agitation est liée à la puissance de fonctionnement des moteurs 17 et 18, qui est de 75 kW pour le moteur 17 et de 50 kW pour le moteur 18. La puissance consommée dans la cuve 1 est de 81 kW et de 68 kW dans la cuve 2 soit un total de 149 kW. Le procédé selon l'invention requiert en général une consommation d'énergie d'environ 50 à 300 kWh pour le traitement d'une tonne de substrat. La vitesse de rotation de l'axe est de 580 t/min. La vitesse de rotation périphérique des pales est de 17 m/s. L'inclinaison des pales est de 45°.
a) Lors du traitement en discontinu d'un substrat constitué de polypropylène provenant de pare-chocs de voiture recouverts d'une peinture du type polyuréthanne à deux composants, on a constaté que le procédé était particulièrement efficace lorsque la cuve contenait :
   - 60 % de polypropylène,
   - 10 % d'agent d'abrasion, et
   - 30 % de liquide dont la composition pondérale était approximativement la suivante :
      - 31 % de potasse,
      - 1 % d'éthanol-amine,
      - 33 % d'eau, et
      - 35 % d'alcool.

   L'agent d'abrasion était constitué de particules de carbonate de calcium commercialisées par la société OMYA sous la dénomination DURCAL 130 correspondant à une courbe granulométrique ayant une taille maximum de 400 µm et un diamètre médian de 130 µm.
b) On a réalisé un deuxième essai en continu avec le même liquide, le même substrat et des particules de carbonate de calcium plus grossières ayant un diamètre moyen de 0,3 mm commercialisées par la société OMYA sous la dénomination GRANICALCIUM. Les proportions de substrat, d'agent d'abrasion et de liquide était les mêmes que dans l'expérimentation a).
c) Un troisième essai a également été réalisé en continu avec les particules de carbonate de calcium DURCAL 130 mentionnées ci-dessus et un liquide dont la composition pondérale était approximativement la suivante :
   - 33 % de potasse,
   - 34 % d'eau, et
   - 33 % d'alcool.

La cuve contenait 50 % de propylène, 10 % de carbonate de calcium et 40 % dudit liquide.

Dans les trois expérimentations a), b) et c), l'énergie spécifique qui a été nécessaire au traitement était d'environ 150 kWh par tonne de substrat traitée.

On a constaté avec surprise que le substrat traité, puis lavé, centrifugé, séché et extrudé présentait une tenue à la lumière et une aptitude au moulage et à être peint semblables à celles d'un polypropylène de première fusion.

Le tableau 1 présente les propriétés mécaniques d'un substrat en polypropylène provenant de pare-chocs recouverts de peinture. Dans la colonne de gauche, le substrat est broyé extrudé, injecté, et ses propriétés mécaniques ont été déterminée sur pièce injectée. Dans la colonne de droite, le substrat est broyé, traité par le procédé selon l'invention pour éliminer la peinture, extrudé, injecté, et ses propriétés mécaniques ont été déterminée sur pièce injectée.

**Tableau 1**

| Caractéristiques | Unités | Avec peinture | Après traitement |
|---|---|---|---|
| Densité | g/cm³ | 0,9 | 0,9 |
| Melt index M.F.I. 2,16 kg/230°c | g/10 mm | 4,8 | 5,4 |
| Résistance au seuil | MPa | 18,6 | 20 |
| Résistance à la rupture | MPa | 15 | 20 |
| Allongement à la rupture | % | 210 | 340 |
| Module d'élasticité | MPa | 850 | 860 |
| Choc FWI | J | 9 | 15,9 |
| Choc IZOD entaillé +23°C | kJ/m² | 68,0 | 77,2 |
| Choc IZOD entaillé -18°C | kJ/m² | 9,3 | 11,0 |
| Dureté Shore D | D | 58 | 58 |

Traiter le polypropylène par le procédé permet d'en améliorer les propriétés d'allongement à la rupture et de résistance au choc. Les matériaux polymères traités selon l'invention présentent des caractéristiques physico-chimiques sensiblement identiques à celles d'un matériau polymère vierge.

## Revendications

1. Procédé de traitement d'un substrat, se présentant sous la forme de morceaux composés d'au moins un matériau polymère, dans lequel on soumet le substrat à une agitation dans un milieu d'abrasion comprenant au moins un liquide et au moins un agent d'abrasion sous la forme de particules, **caractérisé en ce que** la dureté des particules d'agents d'abrasion est inférieure à 7 échelle de Mohs et **en ce que** les particules correspondent à une courbe granulométrique ayant une coupe maximum à 1 mm et un diamètre médian entre 0,05 et 1 mm.

2. Procédé selon la revendication 1, **caractérisé en ce qu'**il est mis en oeuvre avec les proportions pondérales suivantes :
- 40 à 70 % de substrat ;
- 10 à 30 % d'agent d'abrasion ; et
- 20 à 50 % de liquide ;
la somme de tous les pourcentages étant égale à 100 %.

3. Procédé selon la revendication 1 ou 2, **caractérisé en ce que** le liquide comprend au moins un alcool.

4. Procédé selon l'une des revendications précédentes, **caractérisé en ce que** le liquide comprend en outre de l'eau.

5. Procédé selon l'une des revendications précédentes, **caractérisé en ce que** le liquide comprend en outre au moins une base.

6. Procédé selon l'une quelconque des revendications 3 à 5, **caractérisé en ce que** le liquide comprend en outre au moins un agent qui rend compatible et/ou au moins un agent mouillant et/ou au moins un agent dispersant.

7. Procédé selon l'une quelconque des revendications 1 à 6, **caractérisé en ce que** le liquide comprend en outre au moins un solvant.

8. Procédé selon l'une des revendications précédentes,
**caractérisé en ce qu'**une composition pondérale du liquide est la suivante :
- 0 à 100 % d'eau ;
- 0 à 100 % d'alcool ;
- 0 à 50 % de base ;
- o à 5 % d'agent qui rend compatible et/ou d'agent mouillant et/ou d'agent dispersant ; et
- 0 à 50 % de solvant ;
la somme des pourcentages de tous les composants étant égale à 100 %.

9. Procédé selon la revendication 8 **caractérisé en ce que** l'alcool est un alcool primaire ou secondaire ou tertiaire, ou est un polyalcool.

10. Procédé selon la revendication 9, **caractérisé en ce que** l'alcool comprend au moins un noyau aromatique.

11. Procédé selon la revendication 10, **caractérisé en ce que** l'alcool est l'alcool benzylique.

12. Procédé selon l'une des revendications 8 à 11, **caractérisé en ce que** la base est choisie dans le groupe constitué par des bases fortes.

13. Procédé selon la revendication 12, **caractérisé en ce que** la base forte est de l'hydroxyde de sodium ou de potassium.

14. Procédé selon l'une des revendications précédentes, **caractérisé en ce que** les particules d'agent d'abrasion sont constituées de charges minérales.

15. Procédé selon la revendication 14, **caractérisé en ce que** les particules d'agent d'abrasion sont choisies dans le groupe formé par du carbonate de calcium, du kaolin, du talc, et leurs mélanges.

16. Procédé selon l'une des revendications précédentes, **caractérisé en ce que** les particules correspondent à une courbe granulométrique ayant une coupe maximum de 300 à 500 µm avec un diamètre médian entre 50 et 200 µm.

17. Procédé selon l'une des revendications précédentes, **caractérisé en ce que** l'agent qui rend compatible et/ou l'agent mouillant est un composé tensioactif, et est de préférence un savon biodégradable.

18. Procédé selon l'une des revendications précédentes, **caractérisé en ce que** le substrat se présente sous la forme de morceaux ayant des dimensions inférieures à 10 cm, et de préférence comprises entre 0,5 et 3 cm.

19. Procédé selon l'une des revendications précédentes, **caractérisé en ce que** le ou les matériaux polymères composant le substrat est un thermoplastique.

20. Procédé selon la revendication 19, **caractérisé en ce que** le thermoplastique est choisi dans le groupe constitué par des polyoléfines, des polyamides, des polyéthers blocs amides (PEBA), du polystyrène et ses copolymères, des polymères acryliques, des polyvinyliques, du chlorure de polyvinyle (PVC), des polymères spéciaux et leurs mélanges.

21. Procédé selon la revendication 19 ou 20, **caractérisé en ce que** le thermoplastique est du polypropylène, du polyéthylène ou du polystyrène.

22. Procédé selon l'une quelconque des revendications précédentes, **caractérisé en ce que** le substrat est au moins partiellement recouvert et/ou oxydé et/ou altéré par les rayons ultraviolets.

23. Procédé selon la revendication 22, **caractérisé en ce que** le substrat est au moins partiellement recouvert de peinture.

24. Procédé selon l'une des revendications précédentes, **caractérisé en ce qu'**il est mis en oeuvre à une température inférieure à 150 °C, et de préférence comprise entre 70 et 100 °C.

25. Procédé selon l'une quelconque des revendications précédentes, **caractérisé en ce qu'**il est précédé d'une étape de broyage du substrat.

26. Procédé selon l'une quelconque des revendications précédentes, **caractérisé en ce qu'**il est suivi d'une étape de rinçage, d'égouttage, de centrifugation.

27. Procédé selon l'une quelconque des revendications précédentes, **caractérisé en ce qu'**il est mis en oeuvre dans un dispositif comprenant notamment au moins une cuve (1, 2), des pales d'agitation (5, 6, 11, 12), chacune mises en rotation par un moteur (17, 18), des contre-pales (7, 8, 13, 14) disposées sur la paroi de chacune des cuves, un passage de circulation (3), un bac d'alimentation (4) et un déversoir (16).

## Claims

1. Process for treating a substrate in the form of pieces consisting of at feast one polymer material, in which the substrate is stirred in an abrasion medium comprising at least one liquid and at least one abrasion agent in the form of particles, wherein the hardness of the particles of the abrasion agent is inferior to 7 on the Mohs scale and wherein the particles correspond to a grading curve with a maximum cut at 1 mm and a median diameter between 0.05 and 1 mm.

2. Process according to claim 1, wherein it is implemented in the weight proportions given below:
- 40 to 70 % of substrates,
- 10 to 30 % of abrasion agent, and
- 20 to 50 % of liquid,
where the sum of all the percentages is equal to 100 %.

3. Process according to claim 1 or 2, wherein the liquid includes at least one alcohol.

4. Process according to one of the preceding claims, wherein the liquid further includes water.

5. Process according to one of the preceding claims, wherein the liquid further includes at least one base.

6. Process according to any one of claims 3 to 5, wherein the liquid further includes at least one compatibility agent and/or at least one wetting agent and/or at least one dispersing agent.

7. Process according to any one of claims 1 to 6, wherein the liquid further includes at least one solvent.

8. Process according to one of the preceding claims, wherein the weight composition of the liquid is as follows:
- 0 to 100 % of water,
- 0 to 100 % of alcohol,
- 0 to 50 % of base,
- 0 to 5 % of compatibility agent and/or wetting agent and/or dispersing agent, and
- 0 to 50 % of solvent
where the sum of all the percentages is equal to 100 %.

9. Process according to claim 8, wherein the alcohol is a primary or secondary or tertiary alcohol, or a polyalcohol.

10. Process according to claim 9, wherein the alcohol includes at least one aromatic nucleus.

11. Process according to claim 10, wherein the alcohol is benzyl alcohol.

12. Process according to one of claims 8 to 11, wherein the base is chosen from the group consisting of strong bases.

13. Process according to claim 12, wherein the strong base is sodium or potassium hydroxide.

14. Process according to one of the preceding claims, wherein the abrasion agent particles consist of mineral fillers.

15. Process according to claim 14, wherein the abrasion agent particles are chosen from the group consisting of calcium carbonate, kaolin, talc and mixtures thereof.

16. Process according to one of the preceding claims, wherein the particles correspond to a grading curve having a maximum cut of 300 to 500 µm with a median diameter between 50 and 200 µm.

17. Process according to one of the preceding claims, wherein the compatibility agent and/or the wetting agent is a surfactant, preferably a biodegradable soap.

18. Process according to one of the preceding claims, wherein the substrate is in the form of pieces inferior to 10 cm in size, preferably between 0.5 and 3 cm.

19. Process according to one of the preceding claims, wherein the polymer material(s) consisting of the substrate is (are) a thermoplastic.

20. Process according to claim 19, wherein the thermoplastic is chosen from the group consisting of polyolefins, polyamides, polyether block amides (PEBA), polystyrene and its copolymers, acrylic polymers, polyvinyl polymers, polyvinyl chloride (PVC), specific polymers and mixtures thereof.

21. Process according to claim 19 or 20, wherein the thermoplastic is polypropylene, polyethylene or polystyrene.

22. Process according to any of the preceding claims, wherein the substrate is at least partially coated and/or oxidised and/or altered by ultraviolet radiations.

23. Process according to claim 22, wherein the substrate is at least partially coated with paint.

24. Process according to one of the preceding claims, wherein the process is implemented at a temperature inferior to 150°C, preferably comprised between 70 and 100°C.

25. Process according to any of the preceding claims, wherein the process is preceded by a grinding step of the substrate.

26. Process according to any of the preceding claims, wherein the process is followed by rinsing, dripping and centrifugation steps.

27. Process according to any of the preceding claims, wherein the process is set up in a device comprising namely at least one tank (1, 2), stirring blades (5, 6, 11, 12), each rotated by a motor (17, 18), counter-blades (7, 8, 13, 14) positioned along the wall of each tank, a circulation passage (3), a supply vessel (4) and an overflow vessel (16).

## Patentansprüche

1. Verfahren zur Behandlung eines Substrats, das sich in Form von Stücken aus wenigstens einem polymeren Material präsentiert, bei dem man das Substrat einer Bewegung in einem Schleifmedium aussetzt bzw. einem bewegten Schleifmedium aussetzt, das wenigstens eine Flüssigkeit und wenigstens ein Schleifmittel in Form von Partikeln enthält,
**dadurch gekennzeichnet,**
**dass** die Härte der Partikel des Schleifmittels nach der Mohsschen Härteskala niedriger als 7 ist und dass die Partikel einer Granulometrie-Kurve entsprechen, die einen maximalen Querschnitt von 1 mm und einen mittleren Durchmesser zwischen 0,05 und 1 mm hat.

2. Verfahren nach Anspruch 1, **dadurch gekennzeichnet, dass** es mit folgenden Gewichtsanteilen angewandt wird:
- 40 bis 70 % Substrat;
- 10 bis 30 % Schleifmittel; und
- 20 bis 50 % Flüssigkeit;
wobei die Summe aller prozentualen Anteile gleich 100 % ist.

3. Verfahren nach Anspruch 1 oder 2, **dadurch gekennzeichnet, dass** die Flüssigkeit wenigstens einen Alkohol umfasst.

4. Verfahren nach einem der vorangehenden Ansprüche, **dadurch gekennzeichnet, dass** die Flüssigkeit außerdem Wasser umfasst.

5. Verfahren nach einem der vorangehenden Ansprüche, **dadurch gekennzeichnet, dass** die Flüssigkeit außerdem wenigstens eine Base umfasst.

6. Verfahren nach einem der Ansprüche 3 bis 5, **dadurch gekennzeichnet, dass** Flüssigkeit außerdem wenigstens ein kompatibel machendes Mittel und/oder wenigstens ein Netzmittel und/oder wenigstens einen Dispergator umfasst.

7. Verfahren nach einem der Ansprüche 1 bis 6, **dadurch gekennzeichnet, dass** die Flüssigkeit außerdem wenigstens ein Lösungsmittel umfasst.

8. Verfahren nach einem der vorangehenden Ansprüche, **dadurch gekennzeichnet, dass** eine gewichtsmäßige Zusammensetzung der Flüssigkeit die folgende ist:
- 0 bis 100 % Wasser;
- 0 bis 100 % Alkohol;
- 0 bis 50 % Base;
- 0 bis 5 % kompatibel machendes Mittel und/oder Netzmittel und/oder Dispergator; und
- 0 bis 50 % Lösungsmittel;
wobei die Summe aller prozentualen Anteile gleich 100 % ist.

9. Verfahren nach Anspruch 8, **dadurch gekennzeichnet, dass** der Alkohol ein Primär- oder Sekundär- oder Tertiäralkohol oder ein Polyalkohol ist.

10. Verfahren nach Anspruch 9, **dadurch gekennzeichnet, dass** der Alkohol wenigstens einen aromatischen Kern umfasst.

11. Verfahren nach Anspruch 10, **dadurch gekennzeichnet, dass** der Alkohol Benzylalkohol ist.

12. Verfahren nach einem der Ansprüche 8 bis 11, **dadurch gekennzeichnet, dass** die Base aus der Gruppe, die starke Basen umfasst, gewählt wird.

13. Verfahren nach Anspruch 12, **dadurch gekennzeichnet, dass** die starke Base Natrium- oder Kaliumhydroxid ist.

14. Verfahren nach einem der vorangehenden Ansprüche, **dadurch gekennzeichnet, dass** die Schleifmittelpartikel durch mineralische Füllstoffe gebildet werden.

15. Verfahren nach Anspruch 14, **dadurch gekennzeichnet, dass** die Schleifmittelpartikel ausgewählt werden aus der Gruppe, die durch Calciumcarbonat, Kaolin, Talk und ihre Mischungen gebildet wird.

16. Verfahren nach einem der vorangehenden Ansprüche, **dadurch gekennzeichnet, dass** die Partikel einer Granulometrie-Kurve entsprechen, die einen maximalen Querschnitt von 300 bis 500 µm hat, mit einem mittleren Durchmesser zwischen 50 und 200 µm.

17. Verfahren nach einem der vorangehenden Ansprüche, **dadurch gekennzeichnet, dass** das kompatibel machende Mittel und/oder das Netzmittel eine spannungsaktive Zusammensetzung und vorzugsweise eine biologisch abbaubare Seife ist.

18. Verfahren nach einem der vorangehenden Ansprüche, **dadurch gekennzeichnet, dass** das Substrat sich in Form von Stücken präsentiert, deren Abmessungen kleiner als 10 cm sind und vorzugsweise zwischen 0,5 und 3 cm enthalten sind.

19. Verfahren nach einem der vorangehenden Ansprüche, **dadurch gekennzeichnet, dass** das polymere Material (oder die polymeren Materialien), das (die) das Substrat bildet (bilden), ein Thermoplast ist (sind).

20. Verfahren nach Anspruch 19, **dadurch gekennzeichnet, dass** das Thermoplast ausgewählt wird aus der Gruppe, die gebildet wird durch Polyolefine, Polyamide, Polyether-Block-Amide (PEBA), Polystyrol und seine Copolymere, Acrylpolymere, Polyvinyle, Polyvinylchloride (PVC), spezielle Polymere und ihre Mischungen.

21. Verfahren nach Anspruch 19 oder 20, **dadurch gekennzeichnet, dass** das Thermoplast aus Polypropylen, Polyethylen oder Polystyrol ist.

22. Verfahren nach einem der vorangehenden Ansprüche, **dadurch gekennzeichnet, dass** das Substrat wenigstens teilweise überzogen und/oder oxidiert und/oder durch ultraviolette Strahlen verändert ist.

23. Verfahren nach Anspruch 22, **dadurch gekennzeichnet, dass** das Substrat wenigstens teilweise von Farbe bedeckt ist.

24. Verfahren nach einem der vorangehenden Ansprüche, **dadurch gekennzeichnet, dass** es bei einer Temperatur unter 150°C und vorzugsweise zwischen 70 und 100°C angewandt wird.

25. Verfahren nach einem der vorangehenden Ansprüche, **dadurch gekennzeichnet, dass** ihm ein Zerkleinerungsschritt des Substrats vorausgeht.

26. Verfahren nach einem der vorangehenden Ansprüche, **dadurch gekennzeichnet, dass** ihm ein Spül-, Abtropf- und Schleuderschritt folgt.

27. Verfahren nach einem der vorangehenden Ansprüche, **dadurch gekennzeichnet, dass** es in einer Vorrichtung angewandt wird, die insbesondere eine Wanne (1, 2), von einem Motor (17, 18) in Rotation versetzte Rührblätter (5, 6, 11, 12), an der Wand jeder Wanne angeordnete Gegenblätter (7, 8, 13, 14), einen Zirkulationsdurchlass (3), einen Zuflussbehälter (4) und einen Abfluss bzw. Überlauf (16) umfasst.
